(19) **Europäisches Patentamt / European Patent Office / Office européen des brevets**

(11) **EP 1 865 303 A1**

(12) **EUROPEAN PATENT APPLICATION**
published in accordance with Art. 158(3) EPC

(43) Date of publication:
**12.12.2007 Bulletin 2007/50**

(51) Int Cl.:
*G01N 15/14* (2006.01)    *C12Q 1/02* (2006.01)
*G01N 21/64* (2006.01)    *G01N 33/48* (2006.01)

(21) Application number: **06729046.0**

(22) Date of filing: **14.03.2006**

(86) International application number:
**PCT/JP2006/305012**

(87) International publication number:
**WO 2006/103920 (05.10.2006 Gazette 2006/40)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **29.03.2005 JP 2005095238**

(71) Applicant: **SYSMEX CORPORATION**
**Kobe-shi,**
**Hyogo 651-0073 (JP)**

(72) Inventors:
• **ISHISAKA, Masaki**
**1-chome, Chuo-ku, Kobe-shi, Hyogo, 6510 (JP)**
• **IMURA, Yasuyuki**
**1-chome, Chuo-ku, Kobe-shi, Hyogo, 6510 (JP)**
• **KISHI, Kazuki**
**1-chome, Chuo-ku, Kobe-shi, Hyogo, 6510 (JP)**

(74) Representative: **HOFFMANN EITLE**
**Patent- und Rechtsanwälte**
**Arabellastrasse 4**
**81925 München (DE)**

(54) **METHOD OF DISCRIMINATING CANCER AND ATYPICAL CELLS AND CELL ANALYZER**

(57) Highly accurate and easy discrimination of cancer/atypical cells is achieved. A cancer/atypical cell discrimination method comprises: measuring a plurality of cells by a flow cytometer; acquiring a scattered light signal for each of the cells; calculating at least one characteristic parameter by analyzing the waveform of the scattered light signal; and discriminating a cancer/atypical cell from the plurality of cells based on the characteristic parameter.

FIG. 1

EP 1 865 303 A1

**Description**

**TECHNICAL FIELD**

The present invention relates to a method of discriminating a cancer/atypical cell from cells (specimen) sampled from a living body, and a particle agglomerate discrimination method which is required for the discrimination of the cancer/atypical cell.

**BACKGROUND ART**

In medical examinations, cytological diagnosis is utilized as a screening method for early detection of cancer, particularly, uterine cervix cancer.

The cytological diagnosis of the uterine cervix cancer is achieved by scraping cells from a uterine cervix surface with a cotton swab or a scraper, smearing the scraped cells on a slide glass for preparation of a specimen, and observing the specimen with a microscope. The diagnosis based on the morphological observation of a cell with the microscope is made for each specimen by a cytoscreener. Therefore, the cytological diagnosis requires improvement in accuracy and processing speed.

In recent years, there has been known an apparatus which automatically analyzes a cell specimen and determines the presence or absence of cancer cells.

In the automatic analyzer, a smear specimen is prepared by smearing cells possibly including uterine cervix cancer cells on a slide glass, and nuclei and cytoplasm of the cells in the specimen are stained with a Papanicolaou stain. Then, the presence or absence of cancer cells is determined on the basis of morphological information obtained by processing images of the cells in the specimen. However, the automatic cytoanalyzer has a normal cell excluding ratio of 25% and a processing speed of about 8 to about 10 samples/hour. These levels of accuracy and processing speed are not satisfactory for medical practitioners who determine the presence or absence of a cancer in medical examinations.

On the other hand, there is a cytological diagnosis method in which the presence or absence of cancer cells is determined by detecting a marker specific to the cancer cells rather than by the morphological observation of the cells.

Patent Document 1, for example, proposes an immunoassay which employs a protein associated with the uterine cervix cancer and an antibody responsive to the protein as a marker specific to the uterine cervix cancer and the precancerous condition of the uterine cervix cancer.

Patent Document 2 proposes a method of automatically detecting tumor cells and their precursor cells not only in a uterine cervix cell smear specimen but also in a specimen containing cells dispersed therein. In this method, a reagent prepared by labeling an antibody or a nucleic acid probe specifically responsive to two or more markers of cancer cells with a fluorescent material is used, and the markers of the cancer cells are automatically detected on the basis of a fluorescent light signal generated when the markers bind to the reagent for the detection of the cancer cells.

However, even the marker-based method is not satisfactory in the operation easiness, the measurement accuracy and the measurement speed for the discrimination of cancer/atypical cells.

Patent Document 1: JP-T-2001-500609
Patent Document 2: JP-A-2002-296274

**SUMMARY OF THE INVENTION**

**PROBLEMS TO BE SOLVED BY THE INVENTION**

In view of the foregoing, the present invention provides a method which ensures highly efficient and highly accurate discrimination of cancer/atypical cells by analyzing the waveform of an optical signal obtained through flow cytometry, and a particle agglomerate discrimination method which is required for the discrimination of the cancer/atypical cells.

**MEANS FOR SOLVING THE PROBLEMS**

The present invention provides a cancer / atypical cell discrimination method which comprises: measuring a plurality of cells by a flow cytometer; acquiring a scattered light signal for each of the cells; calculating at least one characteristic parameter by analyzing the waveform of the scattered light signal; and discriminating a cancer/atypical cell from the plurality of cells based on the characteristic parameter. Here, the scattered light signal includes at least one of signals indicating forward scattered light and lateral scattered light.

The cells may be uterine cervix cells.

The characteristic parameter may be a characteristic parameter which reflects the complexity of the waveform of the scattered light signal.

The discriminating step may be performed by discriminating the cancer/atypical cell from the plurality of cells based on a combination of two or more characteristic parameters.

One of the characteristic parameters may be a signal width.

The characteristic parameter may serve to discriminate the cancer/atypical cell from a leukocyte agglomerate.

The characteristic parameter may serve to discriminate the cancer/atypical cell from a normal squamous cell.

The characteristic parameter may serve to discriminate the cancer/atypical cell from a normal squamous cell agglomerate.

According to another aspect of the present invention, there is provided a particle agglomerate discrimination method which comprises: measuring a plurality of particles by a flow cytometer; acquiring a scattered light signal for each of the particles; calculating at least one characteristic parameter by analyzing the waveform of the scattered light signal; and discriminating a particle agglomerate from the plurality of particles based on the characteristic parameter.

The characteristic parameter preferably includes at least one of normalized secondary moment and difference integrated value/peak value.

**EFFECTS OF THE INVENTION**

The at least one characteristic parameter, which is calculated on the basis of the waveform of the scattered light signal acquired for each of the cells from the flow cytometer, is employed for the discrimination. Therefore, the cancer/atypical cell can be discriminated from the multiplicity of cells more easily, more efficiently and more accurately, as compared with the methods based on the observation with the microscope and the detection of the markers.

Further, if the flow cytometer is capable of detecting a fluorescent light signal in addition to the scattered light signal as in the embodiments of the present invention to be described below, the inventive method may be combined with the detection method employing the fluorescent-labeled markers. In this case, the measuring accuracy in the detection method employing the fluorescence-labeled markers is expected to be drastically improved.

**BRIEF DESCRIPTION OF THE DRAWINGS**

Fig. 1 is a schematic diagram of an optical system of a flow cytometer to be used in the present invention.

Fig. 2 is a block diagram of a control system of the flow cytometer to be used in the present invention.

Fig. 3 is a diagram for explaining relationships between a signal waveform and characteristic parameters according to the present invention.

Fig. 4 is a diagram for explaining relationships between the signal waveform and other characteristic parameters according to the present invention.

Fig. 5 is a diagram for explaining a relationship between the signal waveform and another characteristic parameter according to the present invention.

Fig. 6 represents explanatory diagrams each showing a relationship between a signal waveform and further another characteristic parameter according to the present invention.

Fig. 7 represents explanatory diagrams each showing a relationship between a signal waveform and still another characteristic parameter according to the present invention.

Fig. 8 represents explanatory diagrams each showing a relationship between a signal waveform and further another characteristic parameter according to the present invention.

Fig. 9 represents explanatory diagrams each showing a relationship between a signal waveform and still another characteristic parameter according to the present invention.

Fig. 10 represents explanatory diagrams each showing a relationship between a signal waveform and further another characteristic parameter according to the present invention.

Fig. 11 is a flow chart showing a process according to the present invention.

Fig. 12 shows an exemplary captured image according to the present invention.

Fig. 13 shows another exemplary captured image according to the present invention.

Fig. 14 shows further another exemplary captured image according to the present invention.

Fig. 15 shows still another exemplary captured image according to the present invention.

Fig. 16 is an explanatory diagram showing discriminability according to a first example of the present invention.

Fig. 17 is an explanatory diagram showing discriminability according to a second example of the present invention.

Fig. 18 is an explanatory diagram showing discriminability according to a third example of the present invention.

Fig. 19 is an explanatory diagram showing discriminability according to the third example of the present invention.

Fig. 20 is an explanatory diagram showing discriminability according to the third example of the present invention.

## DESCRIPTION OF REFERENCE CHARACTERS

100: Flow cell
101: Lens
102: Beam stopper
103: Objective lens
104: Dichroic mirror
105: Detector
106: Detector
107: Objective lens
108: Dichroic mirror
109: Dichroic mirror
110: Interference filter
111: Detector
112: Dichroic mirror
113: Interference filter
114: Detector
115: Dichroic mirror
116: Interference filter
117: Detector
118: Interference filter
119: Detector
120: Pulse laser
121: Camera
123: Ar ion laser

## BEST MODE FOR CARRYING OUT THE INVENTION

The present invention will hereinafter be described in detail by way of embodiments thereof shown in the attached drawings. However, the invention is not limited to these embodiments.

CONSTRUCTION OF FLOW CYTOMETER

OPTICAL SYSTEM

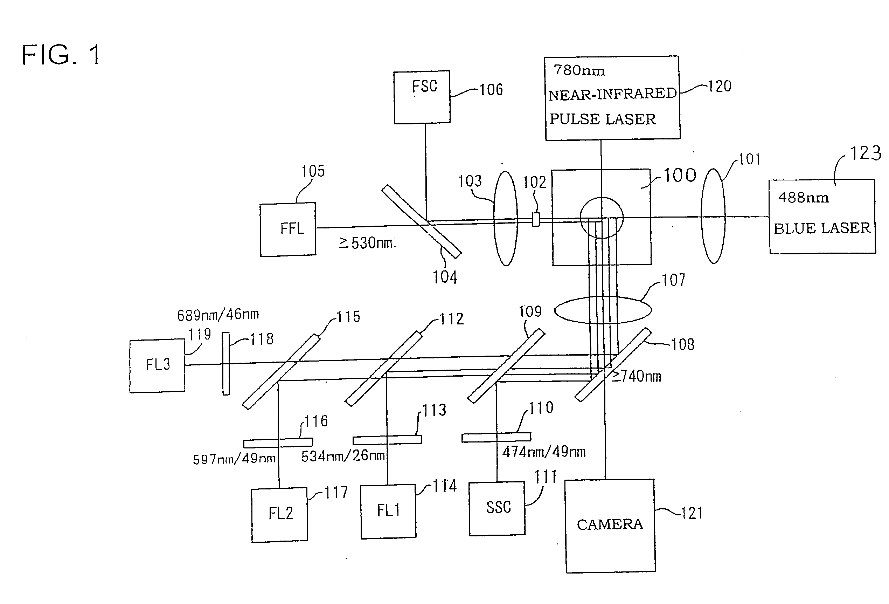

A flow cytometer having an optical system as shown in Fig. 1, for example, is used in the present invention.
The flow cytometer detects forward fluorescent light (FFL) and lateral fluorescent light (FL1 to FL3) as well as forward scattered light (FSC) and lateral scattered light (SSC) from each of cells or particles passing through a flow cell 100, and captures an image of each of the cells (particles) by a camera 121. In the flow cytometer, a specimen stream containing the cells or the particles is formed so that the cells or the particles flow one by one in the flow cell 100, and light from each of the cells or the particles present in the formed specimen stream is detected.
More specifically, a blue laser beam emitted from a continuous emission Ar ion laser 123 having an oscillation wavelength of 488 nm passes through a lens 101. Thus, the laser beam is shaped to have a flat oval beam profile having a minor diameter of about 10 $\mu$m and a major diameter of about 100 $\mu$m, and is incident on the flow cell 100.
The light beam incident on the flow cell 100 passes through the flow cell 100, and is focused on a beam stopper 102 and blocked by the beam stopper. The forward fluorescent light (FFL) and the forward scattered light (FSC) from the cell or the particle are collected by the objective lens 103. The forward fluorescent light (FFL), which has a solid angle of about 10 degrees, passes through a dichroic mirror 104 having a property of transmitting light having a wavelength not shorter than 530 nm, and is incident on a detector (photomultiplier) 105 and detected by the detector 105. The forward scattered light (FSC), which has a wavelength of not greater than 530 nm and a solid angle of about 10 degrees, is incident on a detector (photodiode) 106 and detected by the detector 106.
On the other hand, the lateral fluorescent light and the lateral scattered light from the cell or the particle are collected by an objective lens 107 of a higher numerical number (NA) disposed on a lateral side of the flow cell 100. The light going out of the objective lens 107 is incident on a dichroic mirror 108 having a property of reflecting light having a wavelength shorter than 740 nm. The lateral fluorescent light and the lateral scattered light reflected on the mirror 108 are first incident on a dichroic mirror 109 having a property of reflecting light having a wavelength not longer than 500 nm. The light reflected on the mirror 109 is incident on a detector (photomultiplier) 111 through an interference filter 110 having a center wavelength of 474 nm and a pass wavelength of 49 nm, and the lateral scattered light (SSC) is detected by the detector 111.

Light passing through the dichroic mirror 109 is incident on a dichroic mirror 112 having a property of reflecting light having a wavelength not longer than 550 $\mu$m. The light reflected on the mirror 112 is incident on a detector (photomultiplier) 114 through an interference filter 113 having a center wavelength of 534 nm and a pass wavelength of 26 nm, and lateral green fluorescent light (FL1) is detected by the detector 114.

Light passing through the dichroic mirror 112 is divided into a light component having a wavelength not shorter than 630 nm and a light component having a wavelength shorter than 630 nm by a dichroic mirror 115. The light having a wavelength shorter than 630 nm is incident on a detector (photomultiplier) 117 through an interference filter 116 having a center wavelength of 597 nm and a pass wavelength of 49 nm, and lateral orange fluorescent light (FL2) is detected by the detector 117. The light having a wavelength not shorter than 630 nm is incident on a detector (photomultiplier) 119 through an interference filter 118 having a center wavelength of 689 nm and a pass wavelength of 46 nm, and lateral red fluorescent light (FL3) is detected by the detector 119.

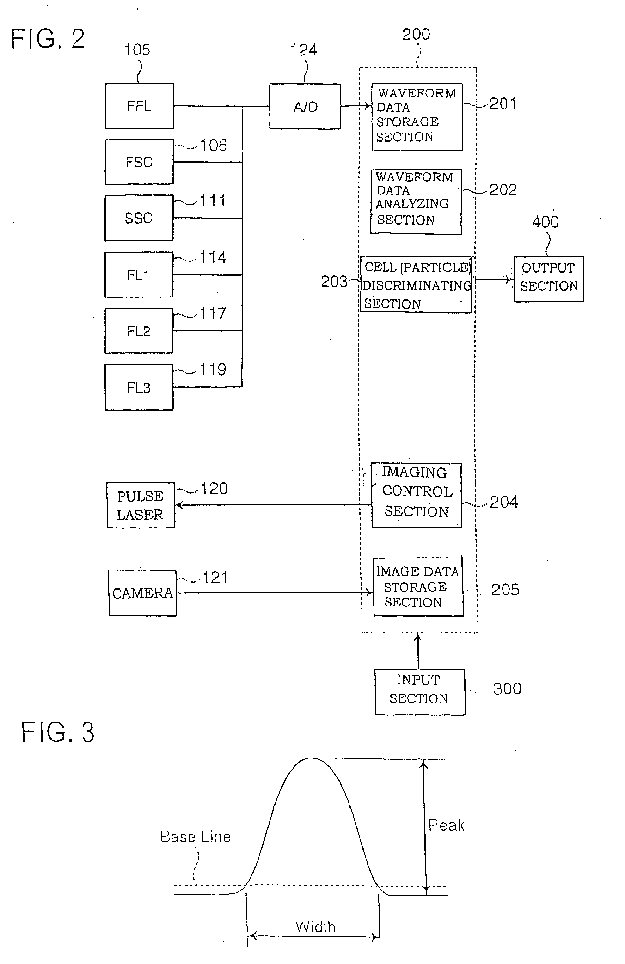

The waveforms of electrical signals indicating the forward scattered light (FSC), the forward fluorescent light (FFL), the lateral scattered light (SSC), the lateral green fluorescent light (FL1), the lateral orange fluorescent light (FL2) and the lateral red fluorescent light (FL3) thus detected are A/D converted by an A/D converter 124 (Fig. 2), and the resulting signals are inputted to an analyzer 200 (Fig. 2). When the cell (particle) passes through the flow cell, a laser beam is emitted from a near infrared pulse laser 120 having an oscillation wavelength of 780 nm as required. The laser beam from the pulse laser 120 serves as transmissive illumination, and light going out of the flow cell 100 passes through the dichroic mirror 108 and forms an image in the camera 121. Thus, a still image of the cell or the particle is captured.

In the embodiment described above, the discrimination of a cancer/atypical cell is based on the scattered light signal. However, the cells may be stained with a fluorescent marker specifically responsive to cancer/atypical cells, and fluorescent light parameters including a fluorescent light intensity, a fluorescent light pulse width and a fluorescent light pulse area may be calculated on the basis of fluorescent light signals obtained from a cell bonded with the fluorescent marker. Thus, at least one of the fluorescent light parameters is employed in combination with at least one of scattered light characteristic parameters to be described later for more accurate discrimination of the cancer/atypical cell. For example, an R-PE-labeled cytokeratin-8 antibody may be used as a marker for detection of adenocarcinoma, and an Alexa488-labeled NMP 179 antibody may be used as a marker for detection of uterine cervix squamous atypical cells. The cells are stained with these markers and measured, for example, by the flow cytometer having the optical system shown in Fig. 1. Then, fluorescent light originated from the corresponding labels (orange fluorescent light from the R-PE label, and green fluorescent light from the Alexa488 label) is detected, and a cell providing a fluorescent light intensity not lower than a predetermined level is analyzed by utilizing the scattered light characteristic parameters. Thus, cells other than the adenocarcinoma and the squamous atypical cells can be efficiently excluded.

Control system

Fig. 2 is a block diagram showing a control system of the flow cytometer. As shown, a control section 200 receives signal waveforms from the detectors 105, 106, 111, 114, 117 via the A/D converter 124, and temporarily stores the acquired waveform data in a waveform data storage section 201. In turn, a waveform data analyzing section 202 analyzes the stored data, and a cell (particle) discriminating section 203 discriminates the cells (particles) on the basis of the result of the analysis. Then, an output section 400 outputs the result of the discrimination,

In the control section 200, an imaging control section 204 causes the pulse laser 120 to emit light on the basis of settings applied from an input section 300.

Thus, an image of each of the cells (particles) is captured by the camera 121, and the resulting image data is stored in an image data storage section 204 and outputted from the output section 400 as required. A table which correlates the signal waveforms stored in the waveform data storage section 201 with the captured cell (particle) images stored in the data storage section 204 is stored in the control section 205.

Here, the control section 200 is a unitary microcomputer or a unitary personal computer.

The input section 300 includes a key board, a touch panel or a mouse, which is used for inputting analysis conditions for the waveform data analyzing section 202, discrimination conditions for the cell (particle) discriminating section 203 and imaging conditions for the imaging control section 204.

The output section includes a CRT, an LCD or a printer.

The A/D converter 124 samples a single analog signal waveform at time points X0, X1, X2,...Xn at sampling intervals of 20 nsec, and quantizes measured voltages with a resolution of 8 bits between a maximum voltage of 10 V and a baseline voltage of 0.05 V to convert the measured voltages into digital signals.

The waveform data analyzing section 202 analyzes the signal waveform and computes values of the following ten characteristic parameters (1) to (10).

(1) Peak Value [Peak]

The parameter Peak indicates the maximum value of the waveform as shown in Fig. 3, and represented by the following expression (1):

$$\mathrm{Peak} \equiv \max_{0 \le i \le n}(x_i) \qquad \cdots \ (1)$$

(2) Width [Width]

The parameter Width indicates the width of a portion of the waveform above the base line as shown in Fig. 3, and represented by the following expression (2):

$$\mathrm{Width} \equiv \underset{p \le i \le n}{\arg\max}(x_i ; x_i > \mathrm{BaseLine}) - \underset{0 \le i < p}{\arg\min}(x_i ; x_i > \mathrm{BaseLine}) \qquad \cdots \ (2)$$

wherein P is a suffix which means that Xp is the peak value.

(3) Half Bandwidth [HW]

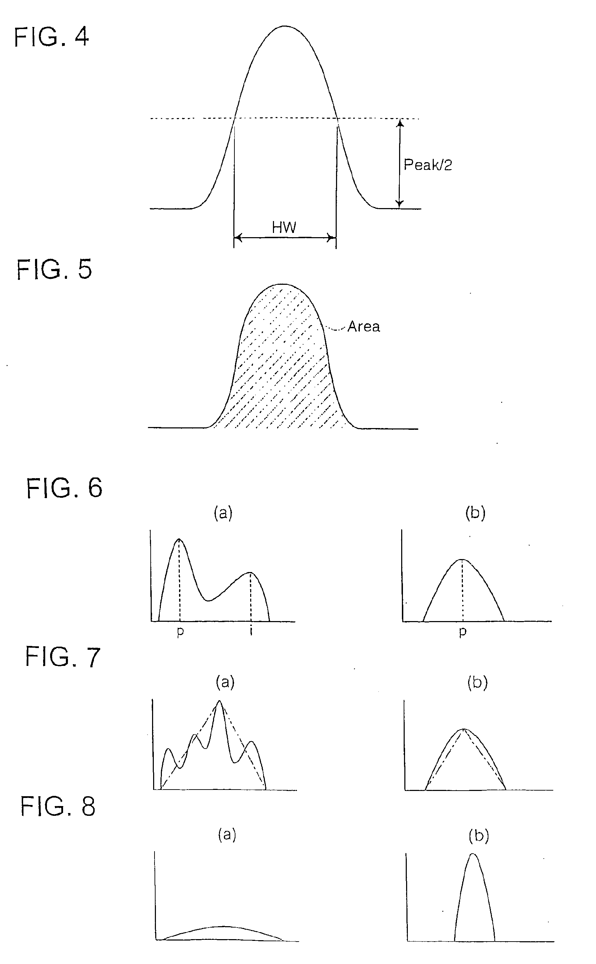

The parameter HW indicates the width of a portion of the waveform at a height of Peak/2 as shown in Fig. 4, and represented by the following expression (3):

$$\mathrm{HW} \equiv \underset{p \le i \le n}{\arg\max}\left(x_i ; x_i > \frac{\mathrm{Peak}}{2}\right) - \underset{0 \le i < p}{\arg\min}\left(x_i ; x_i > \frac{\mathrm{Peak}}{2}\right) \qquad \cdots \ (3)$$

wherein P is a suffix which means that Xp is the peak value.

(4) Area [Area]

The parameter Area indicates the area of the waveform as shown in Fig. 5, and represented by the following expression (4):

$$\mathrm{Area} \equiv \sum_{i=0}^{n} \max(x_i, 0) \qquad \cdots \ (4)$$

(5) Difference integrated value/Peak value [B]

The parameter B is represented by the following expression (5):

$$\mathrm{B} \equiv \sum_{i=1}^{n} \left(\max(x_i, x_{i-1}) - \min(x_i, x_{i-1})\right) \div \mathrm{Peak} \qquad \cdots \ (5)$$

wherein the difference integrated value is a cumulative sum of absolute values of differences between neighboring sampling data.

(6) Normalized secondary moment [M]

The parameter M is represented by the following expression (6):

$$M \equiv \frac{\sum_{i=0}^{n}\left(\max(x_i,0) \cdot (p-i)^2\right)}{\text{Peak} \cdot \text{Width}^2} \qquad \cdots (6)$$

wherein P is a suffix which means that Xp is the peak value.
The parameter M indicates the waviness of the waveform, particularly, the presence of a peak value (a peak or a projection) at a position laterally spaced (along the time axis). A waveform in Fig. 6(a) has a greater parameter value M at a position i on the abscissa, and a waveform in Fig. 6(b) has a smaller parameter value M.
The expression (6) includes division by the denominator for normalization of the parameter M.

(7) Waviness [J]

The parameter J is represented by the following expression (7):

$$J \equiv (a+c) \times (b+d) \qquad \qquad \dots (7)$$

wherein

$$a = \sum_{i=0}^{p-1} \max\left(x_i - i \cdot \frac{Peak}{p}, 0\right)$$

$$b = -1 \cdot \sum_{i=0}^{p-1} \min\left(x_i - i \cdot \frac{Peak}{p}, 0\right)$$

$$c = \sum_{i=p}^{n} \max\left(x_i - (n-i) \cdot \frac{Peak}{n-p}, 0\right)$$

$$d = -1 \cdot \sum_{i=p}^{n} \min\left(x_i - (n-i) \cdot \frac{Peak}{n-p}, 0\right)$$

wherein p is a suffix which means that Xp is the peak value.
The parameter J indicates the waviness J of the waveform, particularly, the divergence of the waveform from a triangle. That is, the parameter J is a product of the area of a part of the waveform present above a broken line and the area of a part of the waveform present below the broken line as shown in Fig. 7(a). A waveform in Fig. 7(b) has a very small parameter value J.

(8) Width/Peak Value [C]

The parameter C indicates the shape of the waveform, particularly, the flatness of the waveform, and is represented by the following expression (8):

$$C \equiv \frac{Width}{Peak} \quad \cdots (8)$$

That is, a waveform in Fig. 8(a) has a smaller parameter value C than a waveform in Fig. 8(b).

(9) Area/ (Width $\times$ Peak Value) [D]

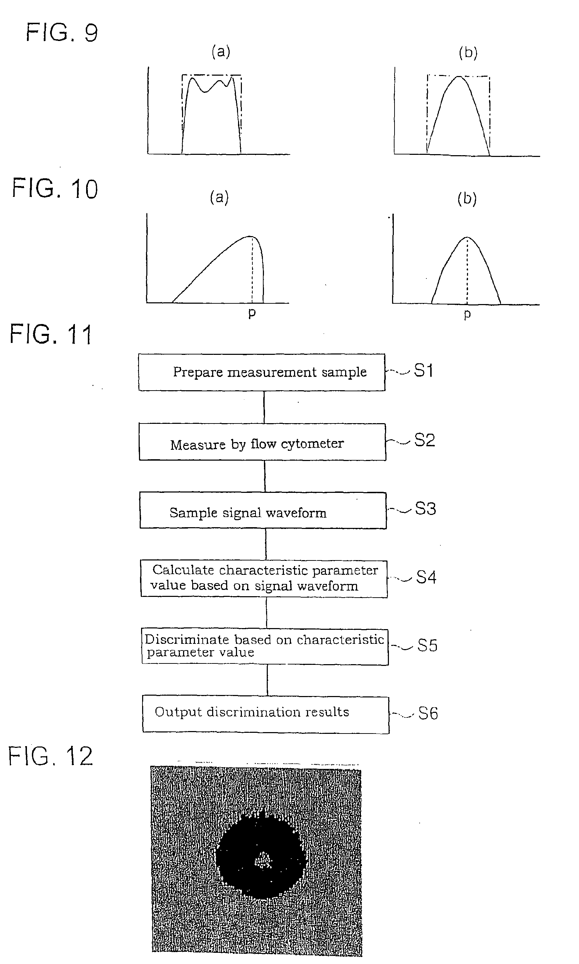

The parameter D indicates whether the shape of the waveform is closer to a triangle or a rectangular as shown in Fig. 9 [Figs. 9(a) and 9(b)], and is represented by the following expression (9):

$$D \equiv \frac{Area}{Peak \cdot Width} \quad \cdots (9)$$

A waveform in Fig. 9(a) has a greater parameter value D, and a waveform in Fig. 9(b) has a smaller parameter value D.

(10) Area of Left Peak Portion/Area of Right Peak Portion [E]

The parameter E indicates the shape of the waveform, particularly, the position of the peak (along the time axis) and the imbalance of the waveform between a left peak portion and a right peak portion, and is represented by the following expression (10):

$$E \equiv \frac{\sum_{i=0}^{P-1} \max(x_i, 0)}{\sum_{i=P}^{n} \max(x_i, 0)} \quad \cdots (10)$$

wherein P is a suffix which means that Xp is the peak value. A waveform in Fig. 10(a) has a greater parameter value E, and a waveform in Fig. 10(b) has a smaller parameter value E.

As shown in Figs. 1 to 10, the scattered light signal waveform has a complicated shape, and the characteristic parameters described above reflect the morphological characteristics of the complicated scattered light signal waveform.

The characteristic parameters analyzed by the waveform analyzing section 202 are correlated with the cell (particle) image stored in the image data storage section, and stored in the control section 205.

Then, the cell (particle) discriminating section 203 shown in Fig. 2 compares the characteristic parameter values calculated by the waveform data analyzing section 202 with preset threshold values of the corresponding characteristic parameters (inputted from the input section 300), and discriminates desired types of cells (particles) from the cells (particles) detected by the flow cytometer. For example, discrimination between singular cells (particles) and agglomerates, discrimination between cancer/atypical cells and leukocyte agglomerates, discrimination between cancer/atypical cells and normal squamous cells and discrimination between cancer/atypical cells and squamous cell agglomerates are achieved.

Measuring Operation

An overall measuring operation to be performed by the aforementioned arrangement will be described with reference to a flow chart shown in Fig. 11.

A measurement sample is first prepared (Step S1), and the prepared sample is supplied into the flow cytometer shown in Figs. 1 and 2 for measurement (Step S2).

Then, signal waveforms obtained by the respective detectors are stored in the waveform data storage section 201 of the control section 200 (Step S3), and the waveform data analyzing section 202 calculates the values of the characteristic parameters on the basis of the stored signal waveforms (Step S4). In turn, the cell (particle) discriminating section 203 classifies cells (particles) contained in the measurement sample according to the cell type on the basis of the calculated characteristic parameter values, and causes the output section 400 to output the results. The imaging control section 204 causes the camera 121 to capture a necessary cell (particle) image, then causes the image data storage section 205 to store image data therein, and causes the output section 400 to output the image.

Example 1

Cancer/atypical cells are present together with leukocyte agglomerates, normal squamous cells, normal squamous cell agglomerates in a specimen. Therefore, discrimination of singular cells from agglomerates is prerequisite for discrimination of the cancer/atypical cells from the other cells.

The measurement was simulated by employing artificial particles, i.e., beads, instead of the cells for examination of discriminability according to the present invention.

According to the process shown in Fig. 11, a measurement sample (1) was first prepared by suspending about 12000 singular beads (latex particles) each having a particle diameter of 9 $\mu$m in RET-SHEATH liquid (produced by SYSMEX Corporation), and a measurement sample (2) was prepared by suspending about 12000 singular beads (latex particles) each having a diameter of 5 $\mu$m and partly naturally agglomerated in RET-SHEATH liquid (Step S1). Then, the measurement samples were measured by the flow cytometer (Step S2).

In turn, a signal waveform of forward scattered light from each of measurement particle objects was sampled in Step S3 shown in Fig. 11 and, at the same time, an image of the measurement particle object was captured by the camera 121 (Fig. 1). Here, signal waveforms for the respective measurement particle objects were stored in correspondence with captured images of the respective measurement particle objects.

In Step 4, the values of the ten characteristic parameters described above were calculated. The characteristic parameter values were stored for each of the captured images. That is, sets of characteristic parameter values for the respective measurement particle objects were stored in correspondence with the captured measurement object images. Therefore, the discriminability provided by the respective characteristic parameters were evaluated by selecting a captured image of a measurement particle object to be identified from the captured images stored in the image data storage section 204 and comparing the characteristic parameter values for the selected captured image with the threshold values of the corresponding characteristic parameters.

As a result of the comparison of the characteristic parameter values with the corresponding threshold values properly preset, it was confirmed that the singular beads (singular particles) were relatively advantageously discriminated from the bead agglomerates (particle agglomerates) by utilizing the characteristic parameter B (difference integrated value/peak value) or the characteristic parameter M (normalized secondary moment).

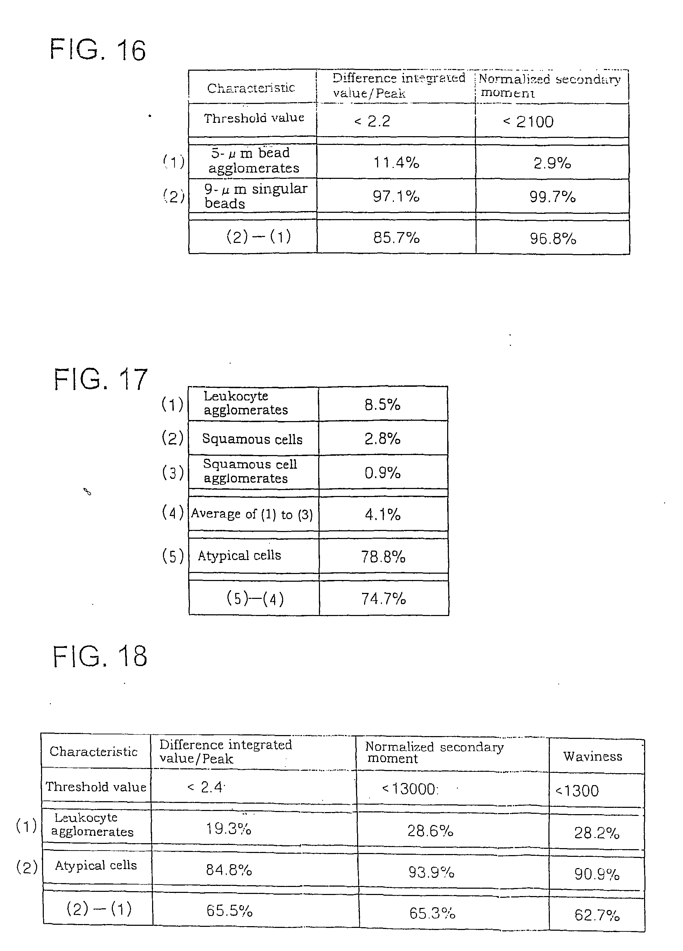

Images of bead agglomerates of 5-$\mu$m beads were selected from the captured images, and the values of the characteristic parameter B for the selected images were compared with the threshold value of the parameter B. Here, the threshold value was set at 2.2 to ensure proper discrimination between the bead agglomerates and the singular beads. A measurement particle object having a characteristic parameter value not smaller than 2.2 was regarded as a bead agglomerate, while a measurement particle object having a characteristic parameter value smaller than 2.2 was regarded as a singular bead. As a result, 11.4% of measurement particle objects identified as bead agglomerates of 5-$\mu$m beads on the basis of the captured images each had a characteristic parameter value smaller than 2.2, and were judged to be singular beads. Further, images of singular 9-$\mu$m beads were selected from the captured images, and the values of the characteristic parameter B for the selected images were compared with the threshold value of the parameter B. Here, the threshold value was set again at 2.2 to ensure proper discrimination between the bead agglomerates and the singular beads. A measurement particle object having a characteristic parameter value not smaller than 2.2 was regarded as a bead agglomerate, while a measurement particle object having a characteristic parameter value smaller than 2.2 was regarded as a singular bead. As a result, 97.1% of measurement particle objects identified as 9-$\mu$m singular beads on the basis of the captured images each had a characteristic parameter value smaller than 2.2, and were judged to be singular beads. Therefore, the singular beads were discriminated from the bead agglomerates with an accuracy of 85.7% (the accuracy of the discrimination is herein defined as a difference between a percentage (2) and a percentage (1) shown in Fig. 16 for convenience because the discriminability is increased as the percentage (2) increases and the percentage (1) decreases, and the same definition is applied to the following description). Date for the discrimination is shown in Fig. 16.

Where the characteristic parameter M was employed, a measurement particle object having a characteristic parameter value not smaller than 2100 (threshold value) was regarded as a bead agglomerate, and a measurement particle object having a characteristic parameter value smaller than 2100 was regarded as a singular bead. As a result, 2.9% of measurement particle objects identified as bead agglomerates of 5-$\mu$m beads on the basis of the captured object images each had a characteristic parameter value smaller than 2100, and were judged to be singular beads. Further, 99.7% of measurement particle objects identified as 9-$\mu$m singular beads on the basis of the captured object images each had a characteristic parameter value smaller than 2100, and were judged to be singular beads. As a result, the singular beads were discriminated with an accuracy of 96.8%.

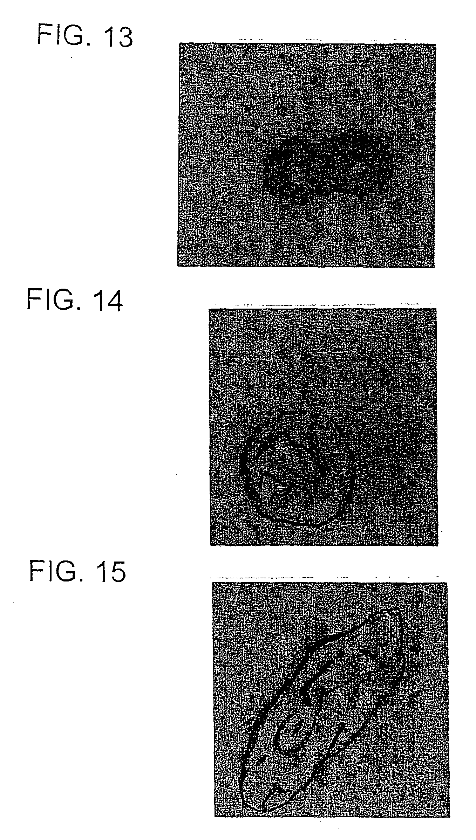

Exemplary captured images of a 9-$\mu$m singular bead and an agglomerate of 5-$\mu$m beads are shown in Figs. 12 and 13, respectively.

Example 2

Next, description will be provided to measurement performed by employing uterine cervix cells as a clinical specimen.

First, a measurement sample was prepared in the following manner in Step S 1 shown in Fig. 11.

A clinical specimen (about $2\times10^5$ cells/tube) preserved in a preservation solution PreservCyt (Cytyc) was subjected to centrifugation at a rotation speed of 10,000 rpm for one minute, and a 10% N-acetyl-L-cysteine PBS solution was added to the resulting pellet. Then, the resulting suspension was subjected to centrifugation again at a rotation speed of 10,000 rpm for one minute. Thus, a pellet free from mucus was provided.

A Zamboni fixation solution (0.2% 2,4,6-trinitrophenol and 2% paraformaldehyde) was added to the pellet and, after 10-minute reaction, the resulting suspension was subjected to centrifugation at a rotation speed of 10,000 rpm for one minute. Then, supernatant was removed, and a coenzyme reaction liquid (PBS containing 0.2% collagenase type I, 0.2% collagenase Type II and 0.1% protease (SIGMA)) was added to the residue. The resulting cells were allowed to react at 37°C for 2 minutes and 30 seconds. After the reaction, 1% protease inhibitor (SIGMA) PBS solution chilled on ice was added to the resulting cells, and the resulting suspension was subjected to centrifugation at a rotation speed of 10,000 rpm for one minute. Then, supernatant was removed. Thus, a pellet containing disintegrated cells was prepared.

Further, PBST (PBS containing 0.05% Tween20) was added to the resulting pellet, which was in turn suspended in the PBST. The resulting suspension was passed through a filter having a mesh diameter of 100 $\mu$m for removal of cell agglomerates, and subjected to centrifugation at a rotation speed of 10,000 rpm for one minute. Then, supernatant was removed, and the resulting cells were suspended again by adding a RET-SHEATH liquid (Sysmex Coportaion). Thus, a measurement sample was prepared. Then, the measurement sample was measured by the flow cytometer (Step S2).

Next, signal waveforms of forward scattered light and lateral scattered light from each of measurement objects were sampled and, at the same time, an image of the measurement object was captured by the camera 121 (Fig. 1) in Step S3 shown in Fig. 11.

First, the measurement objects were classified into leukocyte agglomerates, squamous cells, squamous cell agglomerates and atypical cells on the basis of the morphological features of the captured images, and the numbers $N_1, N_2, N_3, N_4$ of leukocyte agglomerates, squamous cells, squamous cell agglomerates and atypical cells were counted. Exemplary images of an atypical cell and a squamous cell are shown in Figs. 14 and 15, respectively.

Next, characteristic parameter values for the forward scattered light and the lateral scattered light shown in Table 1 were calculated in Step S4 shown in Fig. 11, and the characteristic parameter values were successively compared with the corresponding threshold values shown in Table 1 in Step S5. First, measurement objects identified as leukocyte agglomerates on the basis of the captured images were selected, and values of the characteristic parameter M for the selected measurement objects were compared with the threshold value of the characteristic parameter M. Measurement objects each having a characteristic parameter value M not smaller than 20,000 (threshold value) were regarded as leukocyte agglomerates, while measurement objects each having a characteristic parameter value M smaller than 20,000 were regarded as atypical cells. Of the measurement objects each regarded as an atypical cell with a characteristic parameter value M smaller than 20,000, measurement objects each having a characteristic parameter value Width not smaller than 1,200 (threshold value) were regarded as leukocyte agglomerates, and measurement objects each having a characteristic parameter value Width smaller than 1,200 were regarded as atypical cells. In this manner, measurement objects each having a characteristic parameter value not smaller than (or smaller than) the threshold value were regarded as non-atypical cells (leukocyte agglomerates), and measurement objects not regarded as non-atypical cells after the comparison of the values of all the characteristic parameters shown in Table 1 with the corresponding threshold values were finally judged to be atypical cells. Thus, the number $n_1$ of the atypical cells was counted, and a percentage $n_1/N_1 \times 100$ was calculated.

Next, measurement objects identified as squamous cells on the basis of the captured images were selected, and values of the characteristic parameter M for the selected measurement objects were compared with the threshold value of the characteristic parameter M. Measurement objects each having a characteristic parameter value M not smaller than 20,000 (threshold value) were regarded as squamous cells, while measurement objects each having a characteristic parameter value M smaller than 20,000 were regarded as atypical cells. Of the measurement objects each regarded as an atypical cell with a characteristic parameter value smaller than 20,000, measurement objects each having a characteristic parameter value Width not smaller than 1,200 (threshold value) were regarded as squamous cells, and measurement objects each having a characteristic parameter value Width smaller than 1,200 were regarded as atypical cells. In this manner, measurement objects each having a characteristic parameter value not smaller than (or smaller than) the threshold value were regarded as non-atypical cells (squamous cells), and measurement objects not regarded as non-atypical cells after the comparison of the values of all the characteristic parameters shown in Table 1 with the corresponding threshold values were finally judged to be atypical cells. Thus, the number $n_2$ of the atypical cells was counted, and a percentage $n_2/N_2 \times 100$ was calculated.

Next, measurement objects identified as squamous cell agglomerates on the basis of the captured images were selected, and values of the characteristic parameter M for the selected measurement objects were compared with the threshold value of the characteristic parameter M. Measurement objects each having a characteristic parameter value not smaller than 20,000 (threshold value) were regarded as squamous cell agglomerates, while measurement objects each having a characteristic parameter value smaller than 20,000 were regarded as atypical cells. Of the measurement objects each regarded as an atypical cell with a characteristic parameter value smaller than 20,000, measurement objects each having a characteristic parameter value Width not smaller than 1,200 (threshold value) were regarded as squamous cell agglomerates, and measurement objects each having a characteristic parameter value Width smaller than 1,200 were regarded as atypical cells. In this manner, measurement objects each having a characteristic parameter value not smaller than (or smaller than) the threshold value were regarded as non-atypical cells (squamous cell agglomerates), and measurement objects not regarded as non-atypical cells after the comparison of the values of all the characteristic parameters shown in Table 1 with the corresponding threshold values were finally judged to be atypical cells. Thus, the number $n_3$ of the atypical cells was counted, and a percentage $n_3/N_3 \times 100$ was calculated.

Next, measurement objects identified as atypical cells on the basis of the captured images were selected, and values of the characteristic parameter M for the selected measurement objects were compared with the threshold value of the characteristic parameter M. Measurement objects each having a characteristic parameter value not smaller than 20,000 (threshold value) were regarded as non-atypical cells, while measurement objects each having a characteristic parameter value smaller than 20,000 were regarded as atypical cells. Of the measurement objects each regarded as an atypical cell with a characteristic parameter value smaller than 20,000, measurement objects each having a characteristic parameter value Width not smaller than 1,200 (threshold value) were regarded as non-atypical cells, and measurement objects each having a characteristic parameter value Width smaller than 1,200 were regarded as atypical cells. In this manner, measurement objects each having a characteristic parameter value not smaller than (or smaller than) the threshold value were regarded as non-atypical cells, and measurement objects not regarded as non-atypical cells after the comparison of the values of all the characteristic parameters shown in Table 1 with the corresponding threshold values were finally judged to be atypical cells. Thus, the number $n_4$ of the atypical cells was counted, and a percentage $n_4/N_4 \times 100$ was calculated.

Table 1

| Type of light signal | Characteristic parameter | Threshold conditions for exclusion |
|---|---|---|
| Forward scattered light | M | $\geq 20,000$ |
| | Width | $\geq 1,200$ |
| | J | $\geq 2,500$ |
| | B | $\geq 3.0$ |
| | M | $< 4,000$ |
| | Peak | $\geq 6.5$ |
| | C | $< 80, \geq 270$ |
| | D | $< 0.5, \geq 0.7$ |
| Lateral scattered light | C | $\geq 1,000$ |
| | M | $< 2,000$ |
| | B | $\geq 7.0$ |
| | M | $\geq 20,000$ |
| | J | $\geq 2,000$ |
| Forward scattered light | E | $< 0.3, \geq 2.3$ |
| Lateral scattered light | E | $< 0.2, \geq 3.5$ |

The results are shown in Fig. 17. More specifically, the percentages of leukocyte agglomerates, squamous cells and squamous cell agglomerates judged to be atypical cells were 8.5%, 2.8% and 0.9%, respectively, and the average of the percentages was 4.1%. The percentage of the atypical cells actually judged to be atypical cells was 78.8%, and a difference between this percentage and the average was 74.7%. This indicates that the atypical cells were efficiently discriminated from the other cells.

Example 3

The values of the ten characteristic parameters were calculated on the basis of the signal waveforms of the forward scattered light obtained in the measurement in Example 2, and the discriminability provided by the respective characteristic parameters for the following were examined:

(a) discrimination between the atypical cells and the leukocyte agglomerates;
(b) discrimination between the atypical cells and the squamous cells; and
(c) discrimination between the atypical cells and the squamous cell agglomerates. The threshold values for the discrimination were set to optimum values.

As a result, characteristic parameters providing relatively high discriminability as determined on the basis of the remaining ratios of the respective types of cells are shown in Figs. 18, 19 and 20.

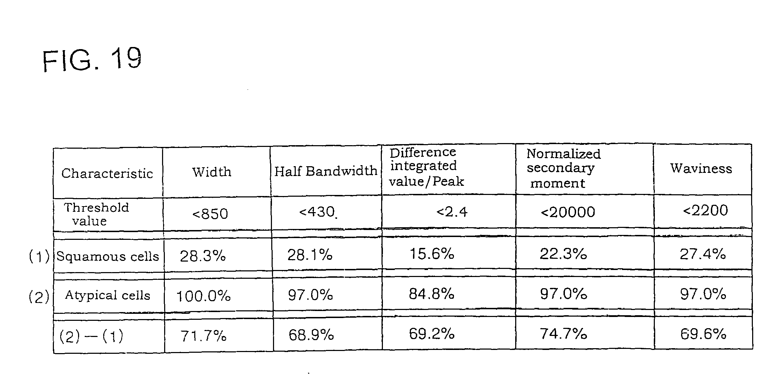

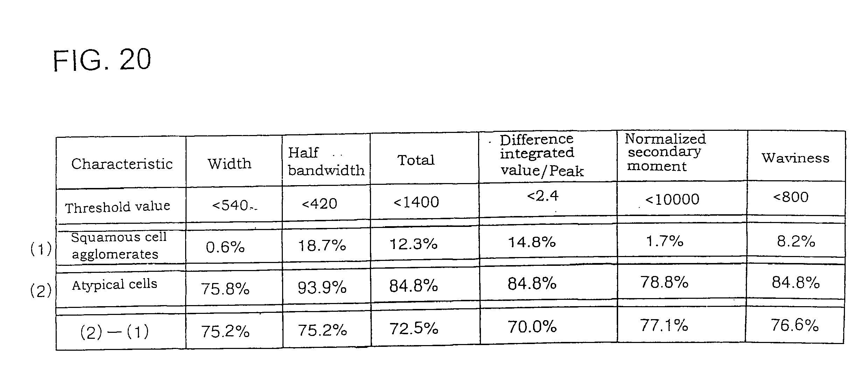

A characteristic parameter suitable for the discrimination (a) is the characteristic parameter B (difference integrated value/peak value), the characteristic parameter M (normalized secondary moment) or the characteristic parameter J (waviness) as shown in Fig. 18. A characteristic parameter suitable for the discrimination (b) is the characteristic parameter Width (width), the characteristic parameter HW (half bandwidth), the characteristic parameter B (difference integrated value/peak value), the characteristic parameter M (normalized secondary moment) or the characteristic parameter J (waviness) as shown in Fig. 19. A characteristic parameter suitable for the discrimination (c) is the characteristic parameter Width (width), the characteristic parameter HW (half bandwidth), the characteristic parameter Area (area), the characteristic parameter B (difference integrated value/peak value), the characteristic parameter M (normalized secondary moment) or the characteristic parameter J (waviness) as shown in Fig. 20.

**Claims**

1. A cancer/atypical cell discrimination method comprising:

   measuring a plurality of cells by a flow cytometer;
   acquiring a scattered light signal for each of the cells;
   calculating at least one characteristic parameter by analyzing a waveform of the scattered light signal; and
   discriminating a cancer/atypical cell from the plurality of cells based on the characteristic parameter.

2. A method as set forth in claim 1, wherein the cells are uterine cervix cells.

3. A method as set forth in claim 1 or 2, wherein the characteristic parameter is a characteristic parameter which reflects morphologic characteristics of the waveform of the scattered light signal.

4. A method as set forth in claim 1 or 2, wherein the characteristic parameter includes at least one of normalized secondary moment, waviness, difference integrated value/peak value, width/peak value, area/(width×peak value) and ratio between left peak area and right peak area.

5. A method as set forth in claim 1 or 2, wherein the discriminating step is performed by discriminating the cancer/atypical cell from the plurality of cells based on a combination of two or more characteristic parameters.

6. A method as set forth in claim 5, wherein one of the characteristic parameters is a signal width.

7. A method as set forth in claim 2, wherein the characteristic parameter serves to discriminate the cancer/atypical cell from a leukocyte agglomerate.

8. A method as set forth in claim 7, wherein the characteristic parameter is one of difference integrated value/peak value, normalized secondary moment and waviness.

9. A method as set forth in claim 2, wherein the characteristic parameter serves to discriminate the cancer/atypical cell from a normal squamous cell.

10. A method as set forth in claim 9, wherein the characteristic parameter is one of width, half bandwidth, difference integrated value/peak value, normalized secondary moment and waviness.

11. A method as set forth in claim 2, wherein the characteristic parameter serves to discriminate the cancer/atypical cell from a normal squamous cell agglomerate.

12. A method as set forth in claim 11, wherein the characteristic parameter is one of width, half bandwidth, area, difference integrated value/peak value, normalized secondary moment and waviness.

13. A particle agglomerate discrimination method comprising:

measuring a plurality of particles by a flow cytometer;
acquiring a scattered light signal for each of the particles;
calculating at least one characteristic parameter by analyzing a waveform of the scattered light signal; and
discriminating a particle agglomerate from the plurality of particles based on the characteristic parameter.

14. A method as set forth in claim 10, wherein the characteristic parameter includes at least one of normalized secondary moment and difference integrated value/peak value.

15. A cytoanalyzer for discriminating a cancer/atypical cell, comprising:

a flow cell which forms a specimen stream containing cells;
a light source which emits light toward the specimen flow in the flow cell;
a detecting section which detects light scattered from each of the cells in the specimen stream and outputs a scattered light signal;
a waveform analyzing section which analyzes a waveform of the outputted scattered light signal and calculates at least one characteristic parameter; and
a control section which discriminates a cancer/atypical cell from the cells based on the calculated characteristic parameter.

16. A cytoanalyzer as set forth in claim 15, wherein the cells are uterine cervix cells.

17. A cytoanalyzer as set forth in claim 15 or 16, wherein the characteristic parameter includes normalized secondary moment, width, waviness, difference integrated value/peak value, peak value, width/peak value, area/(width×peak value) and ratio between left peak area and right peak area.

18. A cytoanalyzer as set forth in claim 15, wherein the characteristic parameter is one of difference integrated value/ peak value, normalized secondary moment and waviness, and the control section discriminates the cancer/atypical cell from a leukocyte agglomerate based on the characteristic parameter.

19. A cytoanalyzer as set forth in claim 15, wherein the characteristic parameter is one of width, half bandwidth, difference integrated value/peak value, normalized secondary moment and waviness, and the control section discriminates the cancer/atypical cell from a normal squamous cell based on the characteristic parameter.

20. A cytoanalyzer as set forth in claim 15, wherein the characteristic parameter is one of width, half bandwidth, area, difference integrated value/peak value, normalized secondary moment and waviness, and the control section discriminates the cancer/atypical cell from a normal squamous cell agglomerate based on the characteristic parameter.

FIG. 1

EP 1 865 303 A1

## FIG. 2

```
105                    124              200
 |                      |               |
[FFL] ────────────── [A/D] ──→ ┌──────────────────┐
                               │ WAVEFORM         │~201
[FSC]~106                      │ DATA             │
                               │ STORAGE          │
[SSC]~111                      │ SECTION          │
                               ├──────────────────┤
[FL1]~114                      │ WAVEFORM         │~202
                               │ DATA             │
[FL2]~117                      │ ANALYZING        │
                               │ SECTION          │
[FL3]~119                      ├──────────────────┤        400
                               │ CELL (PARTICLE)  │         |
                          203──│ DISCRIMINATING   │──→ [OUTPUT
                               │ SECTION          │      SECTION]
                               │                  │
                               │ IMAGING          │
[PULSE  ]~120 ←─────────────── │ CONTROL          │~204
[LASER  ]                      │ SECTION          │
                               ├──────────────────┤
[CAMERA]~121 ────────────────→ │ IMAGE DATA       │
                               │ STORAGE          │~205
                               │ SECTION          │
                               └──────────────────┘
                                        ↑
                                  [INPUT       ]~300
                                  [SECTION     ]
```

## FIG. 3

Base Line

Peak

Width

FIG. 4

FIG. 5

FIG. 6

FIG. 7

FIG. 8

FIG. 9

(a)

(b)

FIG. 10

(a)

(b)

p

p

FIG. 11

| Prepare measurement sample | ~S1 |

| Measure by flow cytometer | ~S2 |

| Sample signal waveform | ~S3 |

| Calculate characteristic parameter value based on signal waveform | ~S4 |

| Discriminate based on characteristic parameter value | ~S5 |

| Output discrimination results | ~S6 |

FIG. 12

FIG. 13

FIG. 14

FIG. 15

## FIG. 16

| | Characteristic | Difference integrated value/Peak | Normalized secondary moment |
|---|---|---|---|
| | Threshold value | < 2.2 | < 2100 |
| (1) | 5-μm bead agglomerates | 11.4% | 2.9% |
| (2) | 9-μm singular beads | 97.1% | 99.7% |
| | (2)—(1) | 85.7% | 96.8% |

## FIG. 17

| | | |
|---|---|---|
| (1) | Leukocyte agglomerates | 8.5% |
| (2) | Squamous cells | 2.8% |
| (3) | Squamous cell agglomerates | 0.9% |
| (4) | Average of (1) to (3) | 4.1% |
| (5) | Atypical cells | 78.8% |
| | (5)—(4) | 74.7% |

## FIG. 18

| | Characteristic | Difference integrated value/Peak | Normalized secondary moment | Waviness |
|---|---|---|---|---|
| | Threshold value | < 2.4 | <13000 | <1300 |
| (1) | Leukocyte agglomerates | 19.3% | 28.6% | 28.2% |
| (2) | Atypical cells | 84.8% | 93.9% | 90.9% |
| | (2)—(1) | 65.5% | 65.3% | 62.7% |

EP 1 865 303 A1

FIG. 19

| Characteristic | Width | Half Bandwidth | Difference integrated value/Peak | Normalized secondary moment | Waviness |
|---|---|---|---|---|---|
| Threshold value | <850 | <430. | <2.4 | <20000 | <2200 |
| (1) Squamous cells | 28.3% | 28.1% | 15.6% | 22.3% | 27.4% |
| (2) Atypical cells | 100.0% | 97.0% | 84.8% | 97.0% | 97.0% |
| (2) — (1) | 71.7% | 68.9% | 69.2% | 74.7% | 69.6% |

## FIG. 20

| | Characteristic | Width | Half bandwidth | Total | Difference integrated value/Peak | Normalized secondary moment | Waviness |
|---|---|---|---|---|---|---|---|
| | Threshold value | <540 | <420 | <1400 | <2.4 | <10000 | <800 |
| (1) | Squamous cell agglomerates | 0.6% | 18.7% | 12.3% | 14.8% | 1.7% | 8.2% |
| (2) | Atypical cells | 75.8% | 93.9% | 84.8% | 84.8% | 78.8% | 84.8% |
| | (2) − (1) | 75.2% | 75.2% | 72.5% | 70.0% | 77.1% | 76.6% |

## INTERNATIONAL SEARCH REPORT

| International application No. |
| --- |
| PCT/JP2006/305012 |

A. CLASSIFICATION OF SUBJECT MATTER
*G01N15/14*(2006.01), *C12Q1/02*(2006.01), *G01N21/64*(2006.01), *G01N33/48*(2006.01)

According to International Patent Classification (IPC) or to both national classification and IPC

B. FIELDS SEARCHED

Minimum documentation searched (classification system followed by classification symbols)
G01N15/00-14, C12Q1/02, G01N21/64, G01N33/48

Documentation searched other than minimum documentation to the extent that such documents are included in the fields searched
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)
JMEDPlus(JDream2), JSTPlus(JDream2), IGAKU YAKUGAKU YOKOSHU
ZENBUN DETABESU

C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 2002-188993 A  (Sysmex Corp.),<br>05 July, 2002 (05.07.02),<br>Par. Nos. [0031] to [0038]; Figs. 4 to 6<br>(Family: none) | 13-14<br>1-12,15-20 |
| Y | JP 3290786 B2  (Sysmex Corp.),<br>22 March, 2002 (22.03.02),<br>Par. No. [0050]<br>& US 5633503 A | 1-12,15-20 |
| Y | JP 10-253624 A  (Toa Iyo Denshi Kabushiki Kaisha),<br>25 September, 1998 (25.09.98),<br>Par. No. [0001]<br>(Family: none) | 1-12,15-20 |

| ☒ | Further documents are listed in the continuation of Box C. | ☐ | See patent family annex. |
| --- | --- | --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>05 June, 2006 (05.06.06) | Date of mailing of the international search report<br>13 June, 2006 (13.06.06) |
| --- | --- |
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

| International application No. |
| --- |
| PCT/JP2006/305012 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2001-345647 A (Sysmex Corp.),<br>14 December, 2001 (14.12.01),<br>Par. No. [0018]<br>(Family: none) | 1-20 |
| A | JP 3347495 B2 (Sysmex Corp.),<br>06 September, 2002 (06.09.02),<br>Par. Nos. [0018] to [0023]; Figs. 3 to 4<br>& US 5719666 A      & EP 0711991 A1 | 1-20 |
| A | JP 2001-281132 A (Sysmex Corp.),<br>10 October, 2001 (10.10.01),<br>(Family: none) | 1-20 |
| A | JP 2001-330550 A (Sysmex Corp.),<br>30 November, 2001 (30.11.01),<br>(Family: none) | 1-20 |
| A | JP 57-010437 A (Toa Iyo Denshi Kabushiki<br>Kaisha),<br>20 January, 1982 (20.01.82),<br>Table 1<br>(Family: none) | 1-20 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001500609 T
- JP 2002296274 A